# FASCICULE DE BREVET EUROPEEN

(11) **EP 3 299 659 B1**
(45) Date de publication et mention de la délivrance du brevet: **03.07.2019**
(21) Numéro de dépôt: 17186549.6
(22) Date de dépôt: 17.08.2017
(51) Int. Cl.: F16D 65/12, B61F 3/00, B61H 5/00

(54) **BOGIE OPTIMISÉ POUR VÉHICULE FERROVIAIRE, NOTAMMENT POUR TRAMWAY**
OPTIMIERTES DREHGESTELL FÜR SCHIENENFAHRZEUG, INSBESONDERE STRASSENBAHN
AN OPTIMIZED BOGIE FOR A RAILWAY VEHICLE, IN PARTICULAR A TRAMWAY

(30) Priorité: 20.09.2016 FR 1658801
(43) Date de publication de la demande: 28.03.2018
(73) Titulaire: ALSTOM Transport Technologies, 93400 Saint-Ouen (FR)
(72) Inventeur: BRISOU, Florent, 17540 FONTPATOUR DE VERINES (FR)
(74) Mandataire: Lavoix

(56) Documents cités:
- EP-A1- 0 911 239
- CN-Y- 201 198 323
- DE-A1- 2 153 060

## Description

La présente invention concerne un bogie de véhicule ferroviaire, notamment de véhicule ferroviaire urbain, par exemple de tramway.

Plus particulièrement, l'invention concerne un bogie comportant quatre roues, et des moyens de freinage comportant des disques de frein, chaque disque de frein étant associé à une roue respective.

Habituellement, le bogie comporte deux ou quatre disques de frein, en fonction des performances de freinage souhaitées et de la masse du véhicule ferroviaire. Par exemple, EP 0 911 239 décrit un bogie à quatre disques de frein, et DE 21 53 060 décrit un bogie à deux disques de frein.

Ainsi, lorsque les performances de freinage avec deux disques de frein ne sont pas satisfaisantes, le bogie est équipé de quatre disques de frein. Toutefois, un tel ensemble de quatre disques de frein est encombrant, et augmente la masse totale du véhicule ferroviaire ainsi que le coût de son cycle de vie.

Par ailleurs, dans certains cas, le véhicule ferroviaire comporte un dispositif de pilotage automatique, de type ATP/ATO (acronymes pour « Automated Train Protection / Automated Train Opération »). Un tel dispositif de pilotage requiert une information de vitesse de référence fiable quelles que soient les conditions d'exploitation, ce qui implique d'installer, autant que faire se peut, un capteur de vitesse sur une roue ou un essieu non motorisé et non freiné. Dans ce cas, il est usuel de n'installer que deux disques de frein sur le bogie, pour associer le capteur à une roue dépourvue de disque de frein.

Toutefois, cette solution n'est pas entièrement satisfaisante, car elle implique de réduire les performances de freinage du véhicule. Or, la masse des tramways est habituellement de plus en plus importante en raison notamment de la présence d'équipements visant à augmenter l'autonomie de ces tramways.

L'invention a notamment pour but de remédier aux problèmes précités, en fournissant un bogie optimisé, présentant de bonnes performances de freinage pour un encombrement acceptable, et autorisant la présence d'un capteur de vitesse non influencé par le freinage tout en conservant des performances de freinage acceptables.

A cet effet, l'invention a notamment pour objet un bogie de véhicule ferroviaire, notamment de tramway, comportant quatre roues, et des moyens de freinage comportant des disques de frein, chaque disque de frein étant associé à une roue respective, caractérisé en ce que les moyens de freinage comportent uniquement trois disques de frein, l'une des roues étant dépourvue de disque de frein.

Le bogie selon l'invention présente une distribution dissymétrique des disques de freinage, ce qui va à l'encontre de la pratique habituelle de l'état de l'art, selon laquelle la distribution des disques de freinage doit être symétrique.

Le bogie selon l'invention présente de meilleures performances de freinage qu'un bogie à deux disques de frein symétriques, et présente un encombrement et une masse réduits par rapport à un bogie à quatre disques de frein symétriques.

En outre, la présence d'une roue dépourvue de disque de frein permet l'installation d'un capteur de vitesse pour dispositif de pilotage automatique, tout en conservant de bonnes performances de freinage.

Un bogie selon l'invention peut comporter en outre l'une ou plusieurs des caractéristiques techniques suivantes, prises seules ou selon toute combinaison techniquement envisageable.
- La roue dépourvue de disque de frein est non-motorisée.
- Le bogie comporte un capteur de vitesse, notamment pour un dispositif de pilotage automatique, le capteur de vitesse étant associé à la roue dépourvue de disque de frein.
- Les quatre roues sont indépendantes.
- Le bogie comporte deux essieux, chaque essieu portant deux roues respectives parmi les quatre roues.
- Le bogie est entièrement non-motorisé.

L'invention concerne également un véhicule ferroviaire, notamment tramway, caractérisé en ce qu'il comporte au moins un bogie tel que défini précédemment.

Avantageusement, le véhicule ferroviaire comporte un dispositif de pilotage automatique, ledit dispositif de pilotage automatique comportant un capteur de vitesse associé à la roue dépourvue de disque de frein du bogie.

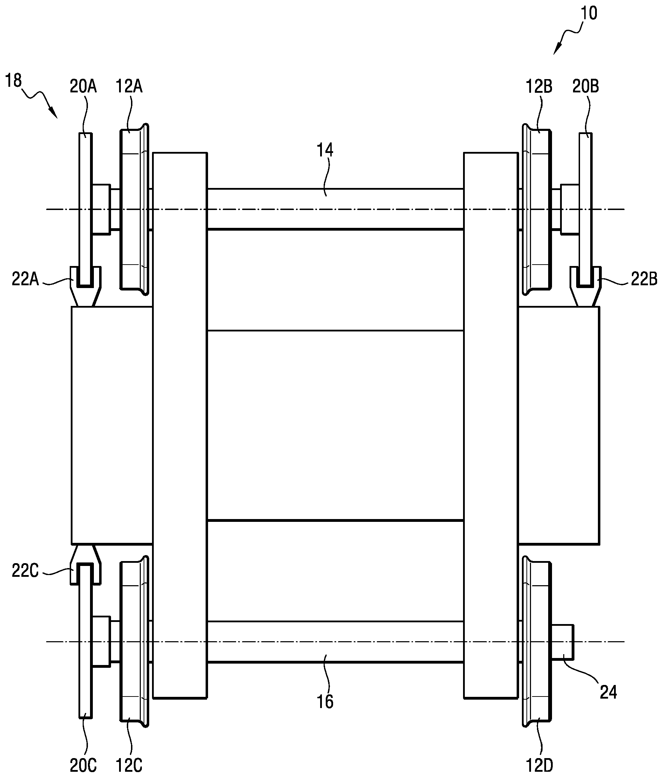

L'invention sera mieux comprise à la lecture de la description qui va suivre, donnée uniquement à titre d'exemple et faite en se référant à la figure unique annexée, représentant schématiquement une vue de dessus d'un bogie selon un exemple de mode de réalisation de l'invention.

On a représenté sur la figure un bogie 10 destiné à équiper un véhicule ferroviaire, notamment un véhicule ferroviaire urbain, par exemple un tramway.

Le bogie 10 comporte quatre roues 12A, 12B, 12C et 12D.

Dans l'exemple décrit, le bogie 10 comporte deux essieux 14 et 16, portant chacun deux roues 12A, 12B, et respectivement 12C, 12D.

En variante, le bogie 10 pourrait comporter quatre roues indépendantes, c'est-à-dire n'étant pas reliées les unes aux autres. Un tel bogie serait alors dépourvu d'essieux communs à deux roues.

Avantageusement, au moins l'une des roues 12D du bogie 10 n'est pas motorisée.

De préférence, le bogie 10 est dépourvu de motorisation, mais forme un bogie porteur pour le véhicule ferroviaire.

Le bogie 10 comporte des moyens de freinage 18, comportant des disques de frein 20A, 20B, 20C. Chaque disque de frein 20A, 20B, 20C est lié à une roue 12A, 12B, 12C respective, de manière classique connue en soi.

Les moyens de freinage 18 comportent avantageusement, pour chaque disque de frein 20A, 20B, 20C, une unité de frein à disque 22A, 22B, 22C, chacune de type classique connu en soi. Chaque unité de frein à disque 22A, 22B, 22C présente deux mâchoires entourant de part et d'autre le disque de frein 20A, 20B, 20C correspondant. Le freinage est commandé par le serrage des mâchoires sur le disque de frein correspondant.

Conformément à l'invention, les moyens de freinage 18 ne comportent que trois disque de frein 20A, 20B, 20C, si bien que l'une des roues 12D est dépourvue de disque de frein (donc évidemment également dépourvue d'unité de frein à disque).

Les moyens de freinage 18 sont donc dissymétriques, puisque la roue 12C opposée à la roue 12D comporte un disque de frein 20C, alors que la roue 12D en est dépourvue.

Avantageusement, le bogie 10 comporte un capteur de vitesse 24, notamment pour un dispositif de pilotage automatique, le capteur de vitesse 24 étant associé à la roue 12D dépourvue de disque de frein.

Dans un mode de réalisation préféré, la roue 12D dépourvue de disque de frein est non-motorisée. Une telle roue 12D, dépourvue de disque de frein et non-motorisée, est particulièrement bien adaptée pour être associée au capteur de vitesse 24.

Il est à noter que l'absence de disque de frein sur la roue 12D facilite l'installation du capteur de vitesse 24, et permet un accès plus facile en maintenance à ce capteur de vitesse 24.

L'invention n'est pas limitée au mode de réalisation précédemment décrit, et pourrait présenter diverses variantes sans sortir du cadre des revendications.

## Revendications

1. Bogie (10) de véhicule ferroviaire, notamment de tramway, comportant quatre roues (12A, 12B, 12C, 12D), et des moyens de freinage (18) comportant des disques de frein (20A, 20B, 20C), chaque disque de frein (20A, 20B, 20C) étant associé à une roue respective, **caractérisé en ce que** les moyens de freinage (18) comportent uniquement trois disques de frein (20A, 20B, 20C), l'une des roues (12D) étant dépourvue de disque de frein.

2. Bogie de véhicule ferroviaire (10) selon la revendication 1, dans lequel la roue (12D) dépourvue de disque de frein est non-motorisée.

3. Bogie de véhicule ferroviaire (10) selon la revendication 1 ou 2, comportant un capteur de vitesse (24), notamment pour un dispositif de pilotage automatique, le capteur de vitesse (24) étant associé à la roue (12D) dépourvue de disque de frein.

4. Bogie de véhicule ferroviaire (10) selon l'une quelconque des revendications 1 à 3, dans lequel les quatre roues (12A, 12B, 12C, 12D) sont indépendantes.

5. Bogie de véhicule ferroviaire (10) selon l'une quelconque des revendications 1 à 3, comportant deux essieux (14, 16), chaque essieu (14, 16) portant deux roues respectives parmi les quatre roues (12A, 12B, 12C, 12D).

6. Bogie de véhicule ferroviaire (10) selon l'une quelconque des revendications précédentes, entièrement non-motorisé.

7. Véhicule ferroviaire, notamment tramway, **caractérisé en ce qu'**il comporte au moins un bogie (10) selon l'une quelconque des revendications précédentes.

8. Véhicule ferroviaire selon la revendication 7, comprenant un dispositif de pilotage automatique, ledit dispositif de pilotage automatique comportant un capteur de vitesse (24) associé à la roue (12D) dépourvue de disque de frein du bogie.

## Patentansprüche

1. Drehgestell (10) für ein Schienenfahrzeug, insbesondere eine Straßenbahn, das vier Räder (12A, 12B, 12C, 12D) und Bremsmittel (18), die Bremsscheiben (20A, 20B, 20C) aufweisen, umfasst, wobei jede Bremsscheibe (20A, 20B, 20C) einem jeweiligen Rad zugeordnet ist, **dadurch gekennzeichnet, dass** die Bremsmittel (18) nur drei Bremsscheiben (20A, 20B, 20C) aufweisen, wobei eines der Räder (12D) keine Bremsscheibe aufweist.

2. Drehgestell (10) für ein Schienenfahrzeug nach Anspruch 1, bei dem das Rad (12D), das keine Bremsscheibe aufweist, nicht motorisiert ist.

3. Drehgestell (10) für ein Schienenfahrzeug nach Anspruch 1 oder 2, einen Geschwindigkeitssensor (24) aufweisend, insbesondere für eine Vorrichtung zur automatischen Steuerung, wobei der Geschwindigkeitssensor (24) dem Rad (12C) zugeordnet ist, das keine Bremsscheibe aufweist.

4. Drehgestell (10) für ein Schienenfahrzeug nach einem beliebigen der Ansprüche 1 bis 3, bei dem die vier Räder (12A, 12B, 12C, 12B) unabhängig sind.

5. Drehgestell (10) für ein Schienenfahrzeug nach einem beliebigen der Ansprüche 1 bis 3, das zwei Achsen (14, 16) aufweist, wobei jede Achse (14, 16) jeweils zwei Räder von den vier Rädern (12A, 12B, 12C, 12D) trägt.

6. Drehgestell (10) für ein Schienenfahrzeug nach einem der vorhergehenden Ansprüche, das vollständig nicht motorisiert ist.

7. Schienenfahrzeug, insbesondere Straßenbahn, **dadurch gekennzeichnet, dass** es mindestens ein Drehgestell (10) nach einem beliebigen der vorhergehenden Ansprüche aufweist.

8. Schienenfahrzeug nach Anspruch 7, eine Vorrichtung zur automatischen Steuerung umfassend, wobei die Vorrichtung zur automatischen Steuerung einen Geschwindigkeitssensor (24) aufweist, der dem Rad (12D) zugeordnet ist, das keine Bremsscheibe des Drehgestells aufweist.

## Claims

1. Bogie (10) for a railway vehicle, especially a tramway vehicle, having four wheels (12A, 12B, 12C, 12D) and braking means (18) having brake discs (20A, 20B, 20C), each brake disc (20A, 20B, 20C) being associated with a respective wheel, **characterised in that** the braking means (18) have only three brake discs (20A, 20B, 20C), one of the wheels (12D) being without a brake disc.

2. Railway vehicle bogie (10) according to claim 1, wherein the wheel (12D) without a brake disc is not motorised.

3. Railway vehicle bogie (10) according to claim 1 or 2, having a speed sensor (24), especially for an automatic control device, the speed sensor (24) being associated with the wheel (12D) without a brake disc.

4. Railway vehicle bogie (10) according to any one of claims 1 to 3, wherein the four wheels (12A, 12B, 12C, 12D) are independent.

5. Railway vehicle bogie (10) according to any one of claims 1 to 3, having two axles (14, 16), each axle (14, 16) carrying two wheels from among the four wheels (12A, 12B, 12C, 12D).

6. Railway vehicle bogie (10) according to any one of the preceding claims, wholly non-motorised.

7. Railway vehicle, especially tramway vehicle, **characterised in that** it has at least one bogie (10) according to any one of the preceding claims.

8. Railway vehicle according to claim 7, comprising an automatic control device, said automatic control device having a speed sensor (24) associated with the wheel (12D) of the bogie that is without a brake disc.
